# EUROPEAN PATENT APPLICATION

(11) **EP 4 596 264 A1**
(43) Date of publication of application: **06.08.2025**
(21) Application number: 25155181.8
(22) Date of filing: 31.01.2025
(51) Int. Cl.: B60G 3/08, B60G 11/28, B60G 11/36, B60G 11/46

(54) **VEHICLE SUSPENSION**

(30) Priority: 02.02.2024 CZ 20240040
(71) Applicant: TATRA TRUCKS a.s., 742 21 Koprivnice (CZ)
(72) Inventor: Kroliczek, Václav, 73542 Terlicko, Dolní Terlicko (CZ); Fucík, Jirí, 74221 Koprivnice (CZ); Smolka, Radomír, 74258 Príbor (CZ)
(74) Representative: Havlík, Michal

(57) **Abstract**

Vehicle suspension, especially suspension of a swinging half-axle (3) of a vehicle relative to the vehicle frame (1), contains a pneumatic spring, created as an air bellows (5) with bottom lid (11) and top lid (9, 17), and a mechanical spring, created as a coil spring (6, 16), which are arranged mutually parallel between the frame (1) and the axle in such manner, that the coil spring (6, 16) is arranged coaxially with the air bellows (5) inside it between both lids (11; 9, 17). The coil spring (6, 16) and air bellows (5) create swinging bellows (2), wherein the swinging bellows (2) is, to allow its turning movement relative to the swinging half-axle (3) in the necessary angular range given by the movement of the half-axle (3), by its bottom lid (11), lodged with the ability to turn around an axis parallel to the longitudinal axis of the vehicle.

## Description

### Technical Field

The invention relates to a vehicle suspension, especially suspension of a swinging half-axle of a vehicle relative to the vehicle frame, contains a pneumatic spring, created as an air bellows with bottom lid and top lid, and mechanical spring, created as a coil spring, which are arranged mutually parallel between the frame and the axle in such manner, that the coil spring is arranged coaxially with the air bellows inside it between both lids.

### Prior Art

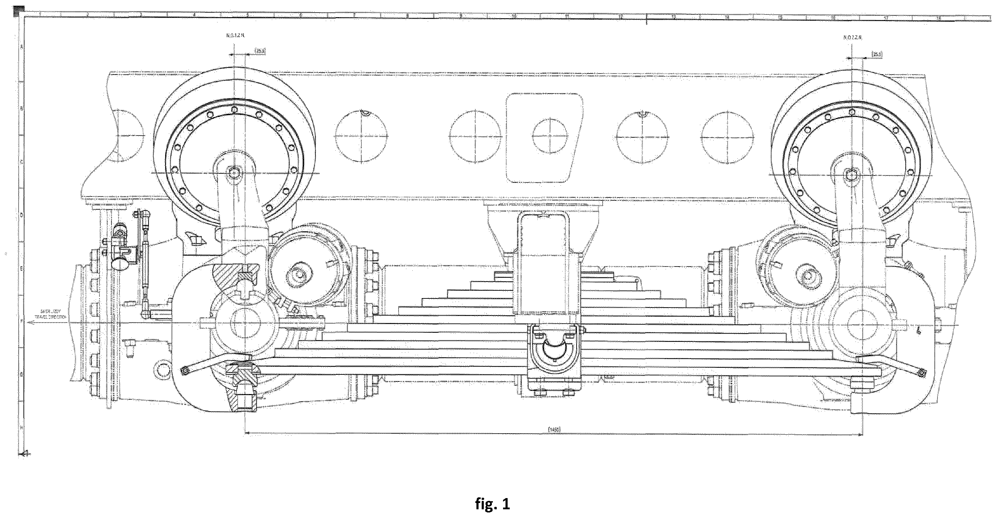

Regarding the fact that the presented invention is aimed precisely for the Tatra chassis concept, which is distinguished by the central load-carrying tube constituting the backbone of the chassis and axles with swinging half-axles, the set of known solutions is very narrow, because it is basically restricted to the prior used solutions or eventually possible solutions on the Tatra chassis. A known solution could thus be the co-called heavy combined suspension, see fig. 1, which makes use of a combination of air bellows placed opposite to each other on the final drive housing and leaf springs. But this suspension could be used only for the non-steerable axles, not for the steerable axles, because of space. This suspension is too large, heavy and complex.

Also, hydro-pneumatic suspension is generally known. This could be easily used for non-steerable axles. Regarding steerable axles, its application is quite restricted, especially because of the length of the springing units, the so-called hydraulic cylinders. These cylinders are so long they complicate use on the front steerable axles because of the lack of space under the cabin of the goods vehicles. They could be thus only easily used on steerable rear axles. Apart from the limits to its application, hydro-pneumatic suspension is a many times more expensive solution regarding both purchase and further operating costs.

In the known, remotely similar solution disclosed in US3552767, the bottom lid 18 of the spring is fixedly connected to the housing 14 of the axle and console 12. Stability of this complex, which is arranged pivotally to the trailing link 2, is provided using air piston rod 32. Air piston rod 32 is slidingly housed in slide housing 36. Air piston rod 32 is inside the slide housing 36 provided with inlet port for air supply from ait container and air outlet port for air draining. Air piston rod 32 is in its lower par also provided with holes for transporting air into the air bellows 28. Thanks to this solution, this suspension could react to varying load on the axle. If the axle is loaded over the previous load, the inlet port of the air piston rod meets the air inlet channel inside the slide housing 36. This increases the overpressure of air inside the air bellows 28. If the axle load grows further, the compression of the air spring complex 4 will cause further increase of air overpressure and coincident compression of the coil spring 20. This further increases the force result of the air spring 4. On the contrary, if the axle load decreases, the air piston rod 32 will be partially slid out from the housing 36, until the outlet port of the air piston rod meets the draining channel of the housing 36. This will cause lowering of the air overpressure inside air bellows 28 and return to the previous clearance height of the vehicle. This known solution has the complex of bottom lid 18 of the spring + housing 14 of the axle + console 12 only pivotally assembled on an pin. This solution is from the point of view of number of identical, respective similar, parts, considered to the be closes prior art according to the applicant.

In another known solution FR2456631, the air spring and mechanical coil spring placed one after another in series, which leads to low rigidity of this combined suspension. This known solution lacks the rubber bump stop and also isn't equipped with any construction element that would limit the maximum allowed deviation of the lower transverse link of the axle 5 upwards. In this known solution, the bottom lid 10 is placed, by its spherically shaped protrusion, into spherical recess in the lower transverse link 5. The service life of this solution is debatable.

### Summary of the Invention

The objective of the presented solution is to provide suspension maximally unified for non-steerable and steerable axles of the Tatra vehicles chassis with central load-carrying tube, that would, at least partially, do away with the disadvantages of prior art, respective provided at least partial advantages over this prior art. Especially the load capacity of the axle should be increased in comparison with prior art, maximum comfort for the crew provided and last but not least, lowest possible production costs reached.

This objective is solved by a vehicle suspension, specifically suspension of a swinging half-axle of the vehicle relative to the vehicle frame, which contains a pneumatic spring, created as an air bellows with bottom lid and top lid, and mechanical spring, created as a coil spring, which are arranged mutually parallel between the frame and the axle in such manner, that the coil spring is arranged coaxially with the air bellows inside it between both lids. According to the invention, the coil spring and air bellows make a swinging bellows, wherein the swinging bellows is, to allow for its relative turning motion in relation to the swinging half-axle in the required angular range given by the movement of the half-axle, placed, through its bottom lid, to allow turning around the axis parallel with the longitudinal axis of the vehicle.

Advantageous embodiment of the invention consists of providing for the turning allowing placement of the bottom lid using spherical plain bearing.

Another advantageous embodiment of the invention consists of providing the bearing with a rubber gaiter to prevent ingress of external impurities.

Another advantageous embodiment of the invention consists of the bearing being self-lubricating.

Another advantageous embodiment of the invention consists of containing a rubber bump stop to minimize the transfer of force hammering onto the frame, which is arranged under the top lid and adapted for cooperation with the top part of the bottom lid from the beginning of their mutual contact to the maximum compression of the bump stop.

Another advantageous embodiment of the invention consists of having, to provide stability of the bottom lid of the air bellows and thus preventing the subverting of the swinging bellows in the direction out from the longitudinal vertical plane of vehicle symmetry or towards it, the turning point of the bottom lid arranged inside the swinging bellows assembly in maximum technically available height, and also the combination of optimal inclination of the swinging bellows and position of the spherical bearing of the bottom lid relative to the turning axis of the swinging half-axle set for optimum value of the maximum offset of bottom lid relative to top lid in both extreme position during the springing action.

Another advantageous embodiment of the invention consists of the fact that the complex of bottom lid of the air bellows is created as a weldment from two parts, wherein their mutually connecting peripheral weld is arranged in the place with minimum stress level, wherein the weldment is, using an pin, housed in a bearing pressed into the housing, using which the swinging bellows is connected to the swinging half-axle from the bottom.

Another advantageous embodiment of the invention consists of the fact that connection of incoming air is arranged in the top lid, which is embodied as bent for both non-steerable and steerable half-axle, or it is embodied as bent for non-steerable half-axle and as straight for steerable half-axle.

Advantages of the present invention, i.e. suspension using air bellows with bottom lid arranged with turning ability (further swinging bellows) comprise marked increase of load capacity of Tatra goods vehicles, while at the same time preserving high level of ride comfort, provided by the air suspension. For example, for vehicles with standard wheel spacing approved for common roadways, the load capacity of the axle is increased from previous 10t to 12t.

Crucial advantage of the new solution is its relatively low price, small weight and especially high compactness. This suspension could thus be used for both a non-steerable axle, and with minimum modification also for a steerable axle, where the build-in space is markedly limited because of the steering.

Compared to the solution from US3552767, the present invention has the stability of bottom lid provided by nesting its pivot point into the swinging bellows assembly, up to the maximum technically available height. Present invention thus doesn't use any guiding air piston rod as US3552767. Thanks to this, present invention gains space for the use of a simple rubber bump stop. To increase the service life of the coil spring, the bottom lid of the present invention is housed in a spherical plain bearing to allow turning, the bearing protected from the ingress of external impurities using a rubber gaiter.

In contrast to FR2456631 in the present invention the mechanical coil spring operates inside the air spring and thus in parallel, or next to each other. This provides for sufficient rigidity and at the same time high carrying capacity of the new combined suspension. Present invention is provided with a rubber bump stop, acting during the full compression of the combined suspension, which minimises the transfer of force hammering to the frame of the vehicle. Present invention has the bottom lid housed in a self-lubricating spherical plain bearing that presents under given load excellent service life and silent operation.

### Overview of the Drawings

The invention will be explained in more detail using a particular example embodiment shown in the drawings, of which
- fig. 1: existing heavy combined suspension on rear non-steerable axles of Tatra vehicles,
- fig. 2: swinging bellows according to the invention built into a rear non-steerable axle,
- fig. 3: two section views showing swinging bellows according to the invention for non-steerable axle and
- fig. 4: also two section views showing swinging bellows according to the invention for steerable axle.

### Example Embodiments of the Invention

Although the present invention will be further described in connection with certain preferred embodiments, it isn't the intention of this description to limits its scope only to thus described embodiments. In contrary, it is the objective of this description to comprise and cover all alternatives, modifications and equivalents of such embodiment that fall into the substance and claimed scope of present invention as defined in attached claims.

Both above mentioned and further described features of the invention could also be used individually alone or in any meaningful mutual combination. Depicted and described embodiments aren't to be considered a closed list, but have the character of examples for describing the invention.

References mentioned in dependent claims refer to other embodiment of the object of the independent claim using features of the dependent claim. But these don't mean a resignation on attaining stand-alone, objective protection for features of these dependent claims.

The invention thus isn't limited to the embodiment described, but a person skilled in the art can embody the details of the invention using many variants within the scope of the attached claims.

Indications of position, such as up, down, lateral, horizontal, vertical, etc., refer to the presently described, and also shown figure, respective the most common position of the suspension during use. They have thus to be adapted accordingly when the position changes.

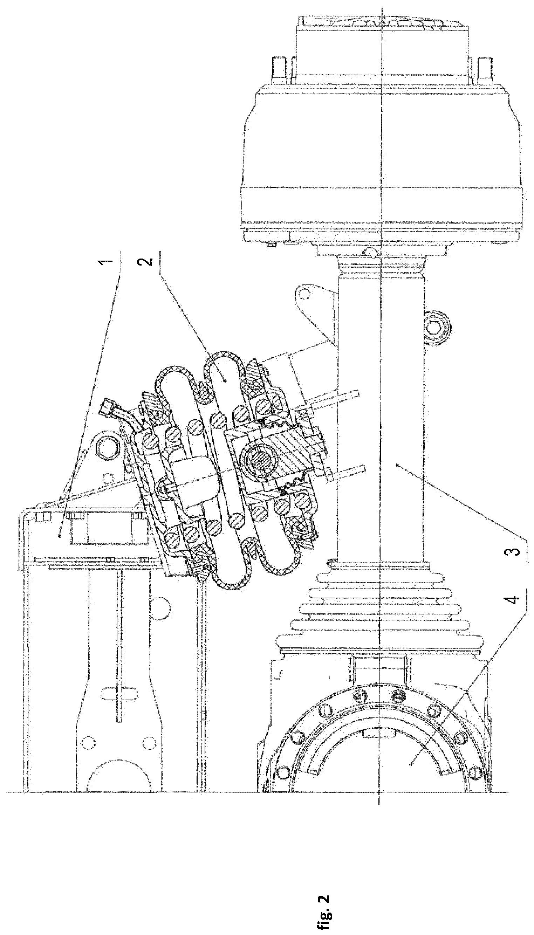

Top lid 9, 17 of the swinging bellows 2 is fixedly connected to the frame 1 of the vehicle (fig. 2). On the contrary, its bottom lid 11 is housed in the housing 14 of the bearing 13 with the ability to turn. Housing 14 is then fixedly connected to the swinging half-axle 3 using a bolted connection.

Top lid 9, 17 serves for supplying air into the swinging bellows, for guiding the coil spring 6, to fix the rubber bump stop 10 and also to fix the top flange 8 of the air bellows 5. Top lid 9, 17 of the air bellows 5 also defines the maximum deviation of the swinging half-axle 3 upwards by its height. Rubber bump stop 10 doesn't limit the maximum deviation of the swinging half-axle 3 upwards. It only minimises force hammering transferred to the vehicle frame 1. Maximum deviation of the swinging half-axle 3 is imparted by top part of the bottom lid 11 abutting the bottom part of the top lid 9, 17.

pin 12 is connected to the weldment of the bottom lid 11 using bolted connection. This pin 12 is in the middle housed in spherical plain bearing 13. This bearing 13 is pressed into the housing 14. To prevent ingress of impurities into the area of the slide fit of the bottom lid 11 rubber gaiter 15 is used. Also, the bottom flange 8 of the air bellows 5 is connected to the bottom lid 11.

Otherwise, well-known from the prior art, the air bellows 5 is manufactured from styrene-butadiene rubber and consists of four layers of viscose woven cord. This air bellows 5 is equipped with a reinforcing ring 7 in the middle. This reinforcing ring 7 serves to maintain the stable shape of rubber air bellows 5 during its operation and thus increases its buckling stability.

As stated above, during the development of the new suspension, the so-called swinging bellows, essential requirements comprised increase of load capacity of the axle, high comfort for the crew and low price. The basis for the new solution is therefore definitely air suspension, which is nevertheless supplemented with purely mechanical springing element because of the pressure limits of the bearing capacity of the rubber air bellows 5. For this, a coil spring 6, 16 was chosen. To prevent the loss of its buckling stability and at the same time its sufficient service life was provided, the bottom lid 11 of the air bellows 5 housed with turning ability. This allows for relative turning movement of the bottom lid 11 relative to the swinging half-axle 3 in necessary angular range set by the movement of the half-axle 3. Top lid 9, 17 of the air bellows 5 isn't housed with turning ability, because its theoretical angular range of its turning motion relative to the vehicle frame 1 would be negligibly small. It would also unfavourably increase the build-in height of the whole springing element and markedly lower the stability of the air bellows 5.

Such turning, respective swinging housing of the bottom lid 11, providing almost axial compression of the springing element, is not only favourable for the coil spring 6, 16, but also markedly prolongs the service life of the air bellows 5.

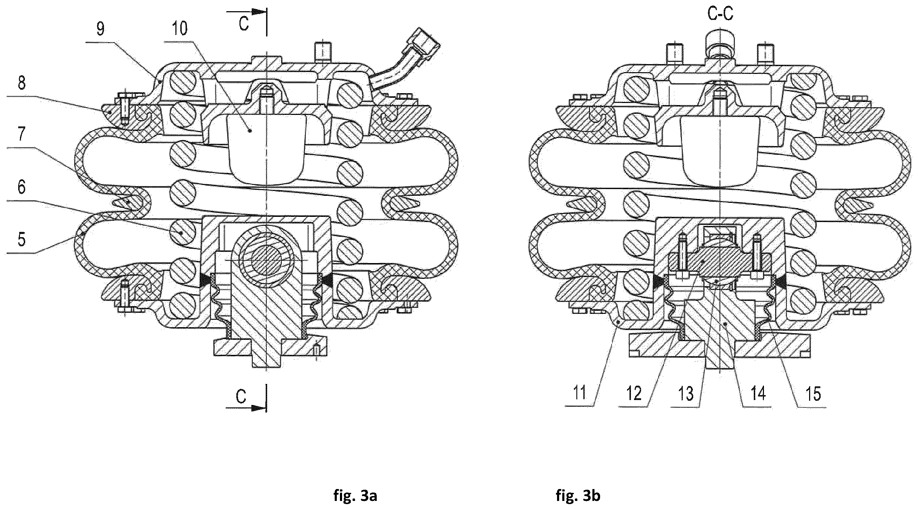

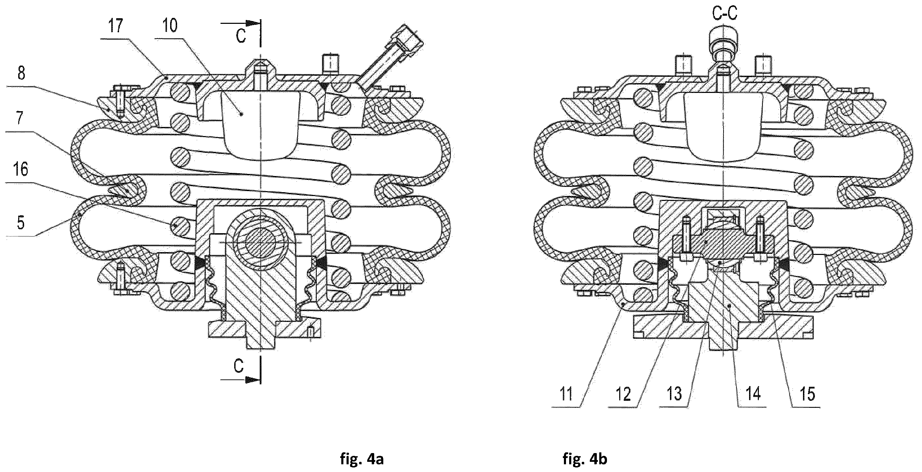

As the above mentioned implies, the swinging bellows 2 was designed in two embodiments, both for a steerable axle 3 and a non-steerable one. Both embodiments are illustrated in detail in fig 3 and 4. During the design, strong emphasis was put on high level of unification, and both embodiments thus differ only in the coil spring 6, 16 and in the air bellows' top lid 9, 17. Thanks to this, the solution of swinging bellows 2 for non-steerable axle (fig. 3) has higher build-in height and thanks to the coil spring 6 of larger wire diameter also higher force capacity, than the solution of the swinging bellows for steerable axle (fig. 4). According to fig. 3 and 4 also the embodiment of air supply connection in top lid 9 of the air bellows 5 of a non-steerable half-axle 3, which is bent, could differ from the air supply connection in top lid 9 of the air bellows 5 of a steerable half-axle 3, which is straight. In a variant, both supply air connections could be bent.

A formidable task during the development was to provide for the stability of the bottom lid 11 and thus prevent the subverting of the swinging bellows 2 in the direction out from the longitudinal vertical plane of vehicle symmetry or towards it. This was attained both by maximum available rising of the position of the spherical bearing 13 of the bottom lid 11, which means its nesting into the swinging bellows 2 assembly, up to the maximum technically available height. This means that the shape of bottom lid 11 mustn't limit the maximum permissible deviation of the half-axle 3 upwards. Also contributing to the stability is the tuning of the kinematics of the movement of the swinging bellows 2 during springing to show optimal value of maximum offset of the bottom lid 11 relative to the top lid 9, 17 in both extreme positions during the springing. This also provides for sufficient service life of the coil spring 6, 16. These optimum values of the offset are attained by the combination of optimum slope of the swinging bellows 2 and the position of the spherical bearing 13 of the bottom lid 11 relative to the turning axis of the swinging half-axle 3.

It was necessary to design the coil spring 6, 16 in such a way that the safe installation/removal of the swinging bellows 2 into/from vehicle chassis was provided. This is why the coil spring 6, 16 is not clamped during the full springing, but when the swinging half-axle 3 moves downwards, before the maximum position is reached, the coil spring 6, 16 is released. In other words, the coil spring 6, 16 attains its free length. Releasing the coil spring 6, 16 is also enabled by non-symmetrical maximum stroke of the swinging half-axle 3 upwards and downwards. This thus means that in the bottom limit position of the swinging half-axle 3 the build-in height for coil spring 6, 16, which is defined by the mutual distance of the top lid 17, 9 and bottom lid 11, is larger than the free length of the coil spring 6 and 16.

The top lid 9, 17 weldment of the air bellows 5 provides the connection of the swinging bellows 2 to the vehicle frame 1 air supply connection point, guiding of the coil spring 6, 16 at its internal diameter and attachment of the rubber bump stop 10. By its height the top lid 9, 17 of the air bellows 5 also defines the maximum deviation of the swinging half-axle upwards and thus the maximum uplift of the vehicle wheel.

The bottom lid 11 assembly of the air bellows 5 also consists of a weldment, but this one is through pin 12 lodged in spherical plain bearing 13. Bearing 13 is pressed into the housing 14, using which the swinging bellows 2 is connected to the swinging half-axle from below. The weldment of the bottom lid 11 consists of two parts, wherein because of the high straining, its mutually connecting peripheral weld is placed in the place with minimum stress value. The use of a spherical plain bearing 13 was necessary out of many reasons. Especially because of the requirement for minimum build-in dimensions and at the same time enormous basic static and dynamic carrying capacity. Spherical nature of the plain bearing 13 allows moderate turning of the bottom lid 11 of the air bellows 5 around its rotational symmetry axis, especially with lower air pressure in the suspension, which is very positive for the service life of the coil spring 6, 16. During its compression and elongation, it naturally produces moderate turning of its bottom end coil relative to its top coil. Other advantages of spherical housing comprise better adaptation to manufacturing inaccuracies at the vehicle frame 1 etc. Spherical plain bearing 13 was selected as maintenance free or self-lubricating, where the slide layer is provided by special lining. Even though the bearing 13 is equipped by its own dust covers on the sides, it is necessary to reliably prevent the ingress of impurities into the area of the spherical lodgement of the bottom lid 11 of the air bellows 5. The rubber gaiter 15 used here serves this purpose.

Swinging bellows 2 as a whole also shows excellent service life. At maximum allowed static air pressure in the air bellows 5 reliably fulfils 200 000 full rises of the wheel without forming damages preventing further function of the suspension. These full rises are equivalent in the axis of the swinging bellows a pulsing loading cycle with top force of 210kN and bottom force of 43kN.

### List of Reference Numerals

- 1: frame (vehicle)
- 2: swinging bellows
- 3: swinging half-axle
- 4: central load-carrying tube
- 5: air bellows
- 6: coil spring of a non-steerable half-axle
- 7: reinforcing ring
- 8: flange (of the air bellows)
- 9: top lid of the air bellows of a non-steerable half-axle
- 10: rubber bump stop
- 11: bottom lid (of the air bellows)
- 12: pin
- 13: bearing
- 14: housing (of the bearing)
- 15: rubber gaiter
- 16: coil spring of a steerable half-axle
- 17: top lid of the air bellows of a steerable half-axle

## Claims

1. Vehicle suspension, especially suspension of a swinging half-axle (3) of a vehicle relative to vehicle frame (1), which contains a pneumatic spring, created as an air bellows (5) with bottom lid (11) and top lid (9, 17), and a mechanical spring, created as a coil spring (6, 16), which are arranged mutually parallel between the frame (1) and axle in such a manner that the coil spring (6, 16) is arranged coaxially with the air bellows (5) inside it between both lids (11; 9, 17),
***characterised by***
the coil spring (6, 16) and the air bellows (5) create swinging bellows (2), wherein the swinging bellows (2) is, to allow its turning movement relative to the swinging half-axle (3) in the necessary angular range given by the movement of the half-axle (3), by its bottom lid (11), lodged with the ability to turn around an axis parallel to the longitudinal axis of the vehicle.

2. Suspension according to claim 1,
***characterised by***
the turning allowing lodgement of the bottom lid (11) being provided using a spherical plain bearing (13).

3. Suspension according to claim 2,
***characterised by***
the bearing (13) being provided with rubber gaiter (15) to prevent the ingress of external impurities.

4. Suspension according to any of the claims 2 or 3,
***characterised by***
the bearing (13) being self-lubricating.

5. Suspension according to any of the claims 1 to 4,
***characterised by***
also containing rubber bump stop (10) to minimise the transfer of force hammering onto the frame (1), arranged under the top lid (9, 17) and adjusted to cooperate with the top part of the bottom lid (11) from the beginning of their mutual contact until the full compression of the bump stop (10).

6. Suspension according to any of the claims 1 to 5,
***characterised by***
the turning point of the bottom lid (11) being arranged inside the swinging bellows assembly (2) at maximum technically available height, and also the combination of the optimum slope of the swinging bellows (2) and the position of the spherical bearing (13) of the bottom lid (11) relative to the turning axis of the swinging half-axle (3) setting the optimum value of the maximum offset of the bottom lid (11) relative to the top lid (9, 17) in both extreme positions during the springing, to provide for the stability of the bottom lid (11) of the air bellows (5) and thus preventing the subverting of the swinging bellows (2) from the longitudinal vertical plane of the symmetry of the vehicle outwards or towards it.

7. Suspension according to claim 6,
***characterised by***
the bottom lid (11) assembly of the air bellows (5) being created as a weldment of two parts, whose mutual connecting peripheral weld is arranged in the place with minimum stress value, wherein the weldment is using an pin (12) lodged in the bearing (13), which is pressed into the housing (14), using which the swinging bellows is (2) connected to the swinging half-axle (3) from below.

8. Suspension according to any of the claims 1 to 7,
***characterised by***
air supply connection, embodied as bent for both non-steerable and steerable half-axle (3), or embodied as bent for the non-steerable half-axle (3) and as straight for the steerable half-axle, being arranged in the top lid (9, 17).
